Europäisches Patentamt

European Patent Office

Office européen des brevets

(19)

(11) Veröffentlichungsnummer: **0 203 105**
**B1**

## (12) EUROPÄISCHE PATENTSCHRIFT

(45) Veröffentlichungstag der Patentschrift: **16.05.90**

(21) Anmeldenummer: **85905590.7**

(22) Anmeldetag: **11.11.85**

(86) Internationale Anmeldenummer:
**PCT/AT85/00045**

(87) Internationale Veröffentlichungsnummer:
**WO 86/02803 22.05.86 Gazette 86/11**

(51) Int. Cl.⁵: **A 01 G 1/00, E 02 D 17/20**

(54) ANORDNUNG ZUM KULTIVIEREN VON BODENFLÄCHEN.

(30) Priorität: **12.11.84 AT 3571/84**

(43) Veröffentlichungstag der Anmeldung:
**03.12.86 Patentblatt 86/49**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
**EP-A-0 045 376**
**DE-A-2 150 770**
**DE-A-2 335 685**
**DE-A-2 729 405**
**FR-A-2 349 680**
**GB-A-2 003 013**

(73) Patentinhaber: **BAUER, Dieter**
**Gerbergasse 23**
**A-9500 Villach (AT)**

(72) Erfinder: **BAUER, Dieter**
**Gerbergasse 23**
**A-9500 Villach (AT)**

(74) Vertreter: **Kliment, Peter, Dipl.-Ing. Mag.-jur.**
**Singerstrasse 8**
**A-1010 Wien (AT)**

Courier Press, Leamington Spa, England.

**Beschreibung**

Die Erfindung bezieht sich auf eine Anordnung zum Kultivieren, insbesondere Begrünen von Bodenflächen mit zwei wasserdurchlässigen, übereinander angeordneten, teilweise miteinander verbundenen, verrottbaren bahnenförmigen Gebilden, deren Länge wesentlich größer als deren Breite ist, und die Kulturgutsamen, insbesondere Grassamen, weitgehend umschließen.

Zum Kultivieren von Bodenflächen z.B. nach Bauarbeiten oder nach Murenabgängen oder aber zur Unterstützung von Aufforstungen in karstgefährdeten Gebieten oder zur Kultivierung von in Versteppung begriffenen Gebieten wurden bisher meist Grasmatten aufgelegt.

Dabei ergibt sich jedoch der Nachteil, daß die Matten bei ihrer Lagerung und beim Transport einer ständigen Pflege bedürfen. Außerdem ergeben sich bei diesen Matten insbesondere im steileren Gelände erhebliche Schwierigkeiten beim Verwachsen mit dem Untergrund. So kommt es häufig vor, daß Teile der Bahnen keinen Kontakt zum Untergrund bekommen und absterben, wodurch an diesen Stellen sehr bald wieder eine Erosion auftritt, die dazu führen kann, daß auch vorerst gesunde Teile der Bahnen unterschwemmt und abgetragen werden.

Eine oben beschriebene Anordnung wurde beispielsweise durch die DE—A—21 50 770 bekannt. Bei dieser bekannten Anordnung ist der Kulturgutsamen zwischen zwei ebenen Platten gehalten. Dadurch ergibt sich aber, insbesondere bei einer großflächigen Kultivierung, der Nachteil, daß diese Platten nur sehr schwer handhabbar sind. Diese bekannte Anordnung eignet sich daher nur für kleinere, gut zugängliche Flächen, nicht aber z.B. zur Kultivierung von gebauten Schipisten in Hochlagen. Außerdem erfordert die bekannte Anordnung auch einen guten Unterboden, der insbesondere bei der Kultivierung von Shipisten kaum gegeben ist.

Durch die DE—A—3 244 703 wurden Elemente zur Begrünung vorgeschlagen, bei deren Erde mit Zusätzen in Planen, Kästen, Folien und ähnlichen unverottbaren Materialien gefüllt ist. Dabei hat das keimende Saatgut vorwiegend gestalterische Aufgaben zu erfüllen. Das Träger- oder Einschlußmaterial aus dem die Formen gebildet werden, ist ein konstruktives Material das nicht verrotten darf, da sonst eine Gestaltung mit Hilfe von Vegetation nicht durchgeführt werden kann. Es handelt sich vorwiegend um die Vielfalt der Formgebung und deren Erhaltung als gestaltendes Element.

Der Grundgedanke der bekannten Lösung liegt also in der Gestaltung von Gebäuden und schrägen Flächen mit Hilfe vielfältiger Formgebung durch Einschließen von keimfähigem Füllgut in verrottbaren Umhüllungsmaterial.

Weiters wurde durch die DE—A—27 29 405 vorgeschlagen auf einem Kunststoffvlies eine Schichte aus Torf od. dgl. aufzubringen, in der auch Samen eingebracht sind, und diese mit Fasern mit dem Kunststoffvlies zu vernähen.

Dabei kann auch eine Deckschichte aus Kunststofffasern vorgesehen sein, die ebenfalls mit den Fasern mitgenäht wird. Weiters wurde auch schon vorgeschlagen Papier oder einen Faserverbundstoff oder aber Kunststofffolien als Tragschichte zu verwenden.

Der Nachteil dieser Lösungen liegt in dem hohen Herstellungsaufwand, der durch das Vernähen der einzelnen Schichten bedingt ist. Außerdem lassen sich solche "Teppiche" nur sehr schwer, bzw. aufgrund deren relativ großer Dicke nur in sehr großen und unhandlichen Rollen zusammenrollen, wodurch sich ein entsprechend großes Transportvolumen ergibt.

Weiters wurde durch die GB—A—2 003 013 eine Matte aus mehreren Bahnen verrottbaren Fasermaterials bekannt, mit welcher Rasen auf ebenen Flächen gebildet werden sollen. Der Grundgedanke der bekannten Lösung liegt dabei in der Schaffung eines ebenflächigen Rasens mit Hilfe einer verrottbaren Gewebematte, die bereits nach dem ersten Wässern ihre Haltbarkeit weitgehend verliert. Voraussetzung für die Bildung eines Rasens ist ein naturgegebener Untergrund, der für die Verwurzelung geeignet ist. Somit scheidet die Anwendung der Matte auf steilen Hängen (Straßenbau, Schipisten, auf schotterigen Böden, auf Felsen usw.) aus.

Ziel der Erfindung ist es, eine Anordnung der eingangs erwähnten Art vorzuschlagen, die sich für die Kultivierung von schlecht kultivierbare Orte, wie z.B. hochgelegene Schipisten, nach Straßenbauten oder schotterige Böden oder sehr felsigen Untergrund, eignet, und die sich leicht handhaben und transportieren läßt.

Erfindungsgemäß wird dies dadurch erreicht, daß eine der beiden flächigen Gebilde glatt und das andere gewellt ausgebildet ist, wobei die durch die Wellung bedingten und mit einer Mischung aus Kulturgutsamen und trockener Erde gefüllten Rippen sich quer zur Längsrichtung der flächenförmigen Gebilde erstrecken und daß die zwischen den flächenförmigen Gebilden vorgesehenen gefüllten Räume in Längsrichtung derselben verschlossen sind.

Durch diese Maßnahmen wird erreicht, daß je nach Sonnenstand eine entsprechende Schattenwirkung gegeben ist, wodurch sich im unteren Teil der Matte ein vorwiegend der Keimung förderliches Schattenklima ergibt. Außerdem ergeben sich durch die wellenförmigen Erhebungen unterschiedliche Keimzonen, solche mit geringer Überdeckung und Keimzonen mit größerer Überdeckung. Dem Keimgut wird somit je nach Beanspruchung das jeweils beste Keimklima geboten. Es kann aber auch durch die Formgebung der Matte und das Auseinanderziehen der Keimzeilen die eventuell naturgegebene, vorhandene Vegetation geschützt werden, wobei die Keimzeilen eine Unterstützung der erforderlichen Aufbaukräfte erfahren (Schattenbildung, Feuchtigkeitsstabilisierung, Windschutz).

Ein weiterer Vorteil der erfindungsgemäßen Ausführung liegt auch darin, daß bei Anwendung auf Hängen das Abfließen des überschüssigen Niederschlagswassers gehindert bzw. je nach Topographie des Geländes geleitet wird. Auf sehr steilen Hängen bilden die Wellen einen sicheren Schutz gegen des Abrutschen von Schnee und eventuell der damit verbundenen Zerstörung des Untergrundes und der Matte. Außerdem kann durch die Formgebung der Matte auch ein vollständiges Bodenbiotop geschaffen werden, das geeignet ist Sanierungen von völlig vegetationsfreien Böden vorzunehmen.

Weiters ergibt sich durch die Wellung des einen flächenförmigen Gebildes der Vorteil, daß die Anordnung leicht zusammengerollt werden kann, wodurch sich ein entsprechend kleines Transportvolumen ergibt. Außerdem ist durch die Möglichkeit des Zusammenrollens auch der Vorteil einer sehr einfachen und raschen Verlegung auf den zu sanierenden Flächen gegeben.

Nach einem weiteren Merkmal der Erfindung kann vorgesehen sein, daß die beiden Bahnen miteinander durch einen wasserlöslichen Kleber verbunden sind, wodurch die mit dem Erde-Samengemisch gefüllten Bahnen leicht aufgerollt und so auf sehr kleinem Raum gelagert werden können.

Um das Durchstoßen der Keimlinge und der Wurzeln durch die Bahnen zu erleichtern, kann weiters vorgesehen sein, daß die Bahnen mit vorzugsweise in deren Längsrichtung verlaufenden Schlitzen versehen sind.

Bei in Längsrichtung verlaufenden Schlitzen kann die Anordnung ohne weiteres gerollt werden, ohne daß es zu einem Öffnen der Schlitze kommt, sodaß es trotz der Schlitze zu keinem Auslaufen der Erde-Samenmischung kommt.

Letzteres kann weiters dadurch verhindert werden, daß der Verschluß der zwischen den flächenförmigen Gebilden vorgesehenen, gefüllten Räumen durch Verkleben mit einem wasserlöslichen Kleber, z.B. mit wassergelöster Zellulose, erfolgt.

Dabei ergibt sich durch das Verkleben mit einem wasserlöslichen Kleber der Vorteil einer sehr guten Umweltverträglichkeit.

In dieser Hinsicht ist es besonders günstig, wenn die flächigen Gebilde aus Bitumenpappe oder gegebenenfalls Kalkmehl zugesetzt sind, bestehen. Diese bahnenartigen Gebilde werden von den Keimlingen und deren Wurzeln aufgrund des Kapillardruckes aufgesprengt und zersetzen sich durch die Einwirkung der Humussäure. Durch das Aufsprengen der Bahnen kommt es auch zu einem flächigen Bewuchs.

Um eine ausreichende Benetzung des von den Bahnen abgedeckten Untergrundes und damit die Ausnutzung der Speicherfähigkeit des Untergrundes zu ermöglichen, kann nach einem weiteren Merkmal der Erfindung vorgesehen sein, daß im Bereich der streifenförmigen Abschnitte, in denen die beiden flächigen Gebilde miteinander verbunden sind, beide Bahnen durchsetzende Durchbrüche angeordnet sind.

Durch die das Erde-Samengemisch umgebenden Bahnen werden, die Samen bzw. die Keimlinge gegen ein Ausschwemmen geschützt, wobei aber das Verwurzeln mit dem abgedeckten Untergrund nicht behindert wird. Damit werden optimale Voraussetzungen für die Kultivierung bzw. Begrünung von sehr schwierigen Boden, wie z.B. aufgelassenen Steinbrüchen oder gebauten Schipisten in größeren Höhenlagen geschaffen. Dieser Schutz hält bei entsprechender Wahl des Bahnenmaterials, wie z.B. Bitumenpappe solange an, bis die Grasnabe eine ausreichende Dichte und damit Widerstandsfähigkeit erreicht hat. Außerdem wird durch die bahnenartigen flächigen Gebilde auch ein zu rasches Austrocknen nach der Verlegung bei längeren Tockenperioden verhindert, desgleichen ein Verwehen der Samen.

Die erfindungsgemäße Anordnung läßt sich auch sehr leicht an Hängen verlegen, wobei es genügt, die Bahnen mit vorzugsweise verrottbaren Pfählen, z.B. Holzpflocke im Untergrund zu verankern.

Die Erfindung wird nun an Hand der Zeichnung näher erläutert. Dabei zeigt:

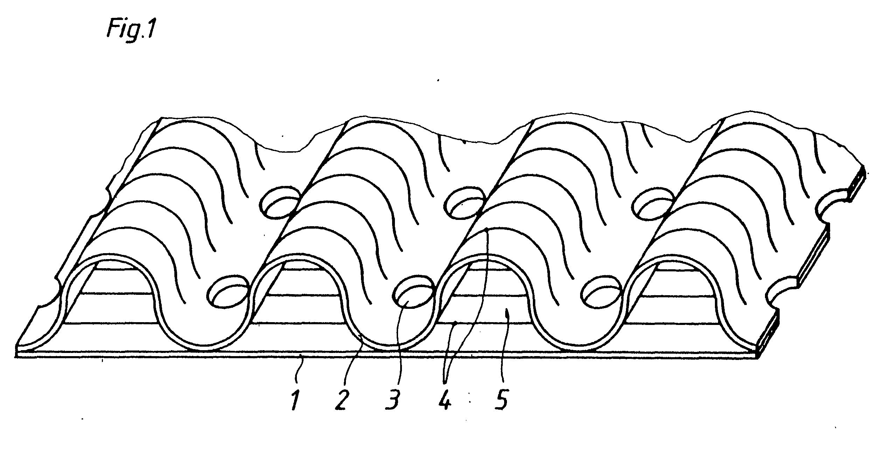

Fig. 1 schematisch eine erfindungsgemäße Anordnung;

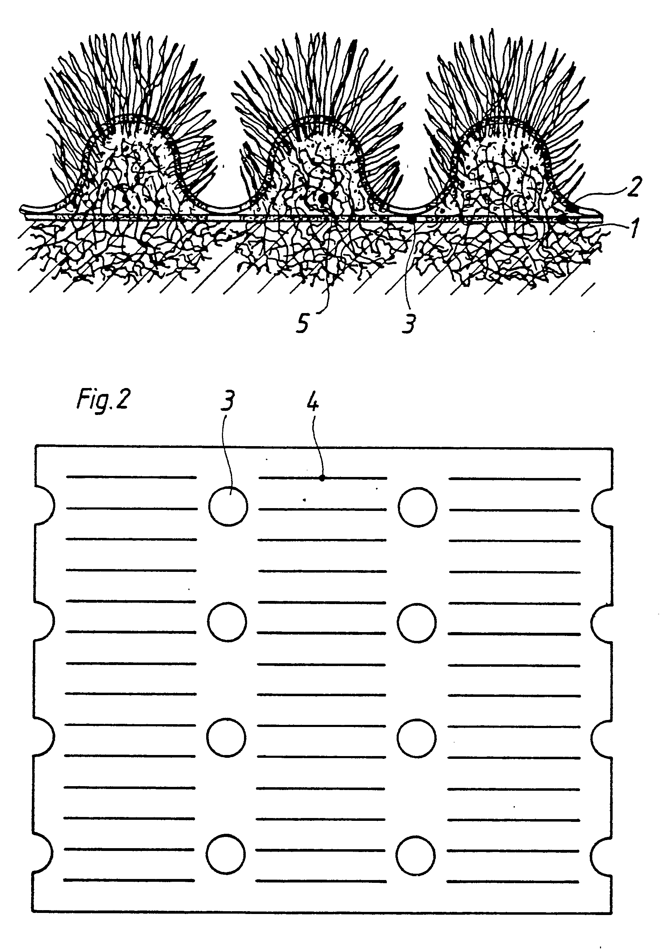

Fig. 2 eine Draufsicht auf die Anordnung nach Fig. 1;

Fig. 3 einen Schnitt durch die bereits verlegte Anordnung nach Fig. 1 und 2 und

Fig. 4 schematisch das Verlegen der Anordnung nach Fig. 1 bis 3.

Die erfindungsgemäße Anordnung besteht im wesentlichen aus zwei Bahnen, von denen die untere Bahn 1 glatt und die obere Bahn 2 gewellt ist. Diese beiden Bahnen 1, 2 die vorzugsweise aus Bitumenpappe bestehen, der gegebenenfalls auch Kalkmehl zugesetzt ist, sind im Bereich der Wellentäler der oberen Bahn 2 miteinander durch Kleben verbunden, wobei dazu vorzugsweise ein wasserlöslicher Kleber verwendet wird.

Im Bereich der Verklebung sind beide Bahnen 1, 2 durchsetzende Durchbrüche 3 angeordnet, die dazu dienen, das Eindringen von Wasser in den nach der Verlegung abgedeckten Untergrund zu ermöglichen.

Die beiden Bahnen 1, 2 sind mit in Längsrichtung der Bahnen verlaufenden Schlitzen 4 versehen, die das Durchstoßen der Keimlinge und der Wurzeln durch die Bahnen erleichtern.

Die zwischen den Klebestellen verbleibenden Taschen 5 sind mit einer Mischung aus Erde, z.B. einem Gemisch aus Humus, Torf und gegebenenfalls auch Dünger, und Kulturgutsamen, z.B. Grassamen gefüllt.

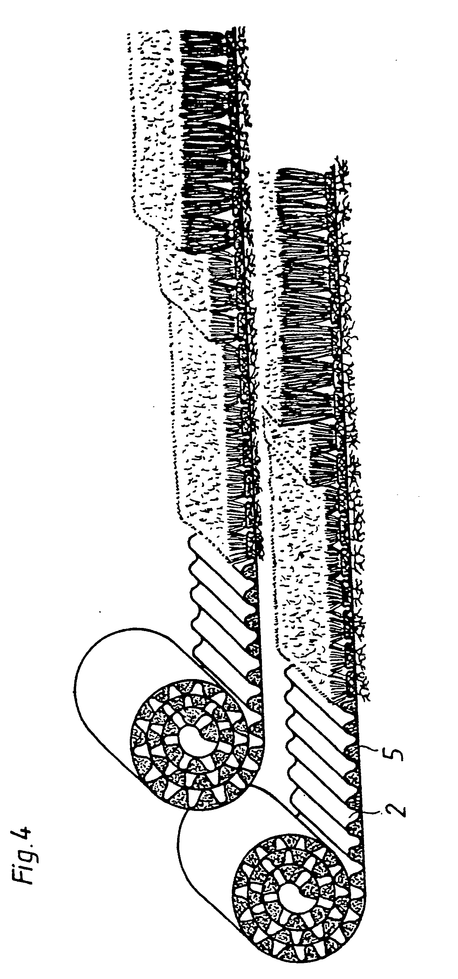

Wie aus Fig. 4 ersichtlich, werden die mit dem Erde-Samengemisch gefüllten Bahnen 1, 2 die zu Rollen aufgewickelt sind, einfach auf den Untergrund aufgelegt und aufgerollt. Nach dem Auflegen, wobei die Bahnen insbesondere im steileren Gelände, z.B. durch Holzpflöcke befestigt werden können, genügt es die verlegten Bahnen 1, 2 mit Wasser zu besprengen. Danach beginnen die Samen, die in der trockenen Erde zwar keimfähig erhalten wurden aber mangels Feuchtigkeit nicht keimen konnten, zu keimen. Dabei durchstoßen die Keimlinge und deren Wurzeln, wie aus Fig. 3 ersichtlich ist, die Bahnen 1 und 2. Dabei bewirken die Wurzeln eine Verklammerung mit dem Untergrund.

Wie aus Fig. 4 ersichtlich, kann die kultivierte bzw. begrünte Fläche, nachdem die Keimlinge die obere Bahn 2 in genügendem Ausmaß durchstoßen haben, gewalzt werden, wodurch eine durchgehende und relativ gleichmäßig begrünte Fläche entsteht.

Die in Längsrichtung der Bahnen 1, 2 verlaufenden Stirnseiten der mit dem Erde-Samengemisch gefüllten Taschen 5 sind zweckmäßigerweise durch wasserlösliche Zellulose verschlossen, sodaß bei der Lagerung beim Transport ein Austritt des Gemisches vermieden wird.

### Patentansprüche

1. Anordnung zum Kultivieren, insbesondere Begrünen von Bodenflächen mit zwei wasserdurchlässigen, übereinander angeordneten, teilweise miteinander verbundenen, verrottbaren bahnenförmigen Gebilden, deren Länge wesentlich größer als deren Breite ist, und die Kulturgutsamen, insbesondere Grassamen, weitgehend umschließen, dadurch gekennzeichnet, daß eine der beiden Bahnen (1, 2) glatt und die andere gewellt ausgebildet ist, wobei die durch die Wellung bedingten Rippen mit einer Mischung aus den Kulturgutsamen und trockener Erde gefüllt sind und sich quer zur Längsrichtung der flächenförmigen Gebilde erstrecken und daß der zwischen den flächenförmigen Gebilden (1, 2) vorgesehenen gefüllten Räume (5) in Längsrichtung dieser Gebilde verschlossen sind.

2. Anordnung nach Anspruch 1, dadurch gekennzeichnet, daß beide flächenförmigen Gebilde (1, 2) mit einem wasserlöslichen Kleber miteinander verbunden sind.

3. Anordnung nach Anspruch 1 oder 2, dadurch gekennzeichnet, daß beide flächenförmige Gebilde (1, 2) aus Bitumenpappe, der gegebenenfalls Kalkmehl zugesetzt ist, gebildet sind.

4. Anordnung nach einem der Ansprüche 1 bis 3, dadurch gekennzeichnet, daß die flächenförmigen Gebilde (1, 2) mit vorzugsweise in deren Längsrichtung verlaufenden Schlitzen (4) versehen sind.

5. Anordnung nach einem der Ansprüche 1 bis 4, dadurch gekennzeichnet, daß im Bereich der streifenförmigen Abschnitte, in denen die beiden flächenförmigen Gebilde miteinander verklebt sind, diese durchsetzende Durchbrüche (3) angeordnet sind.

6. Anordnung nach einem der Ansprüche 1 bis 5, dadurch gekennzeichnet, daß der Verschluß der zwischen den flächenförmigen Gebilden vorgesehenen gefüllten Räume (5) durch Verkleben mit einem wasserlöslichen Kleber, z.B. mit wassergelöster Zellulose erfolgt.

### Revendications

1. Dispositif pour la mise en culture de terrains, en particulier pour les rendre verdoyants, comprenant deux nappes en forme de bandes superposées, reliées l'une à l'autre par endroits, perméables à l'eau et putrescibles, dont la longueur est nettement plus grande que la largeur et qui renferment, dans une large mesure, des graines de plantes, en particulier de la semence d'herbe, caractérisé en ce que l'une des deux bandes (1, 2) est lisse et l'autre est ondulée, les nervures formées par l'ondulation s'étendant transversalement à la direction longitudinale des nappes et étant remplies d'un mélange de graines de plantes et de terre sèche, et que les espaces (5) remplis prévus entre les nappes (1, 2) sont fermés dans le sens de la longueur de ces nappes.

2. Dispositif selon la revendication 1, caractérisé en ce que les deux nappes (1, 2) sont reliées ensemble par une colle soluble à l'eau.

3. Dispositif selon la revendication 1, caractérisé en ce que les deux nappes (1, 2) sont formées de cartons bitumineux, auquel on a ajouté éventuellement de la chaux pulvérisée.

4. Dispositif selon une des revendications 1 à 3, caractérisé en ce que les nappes (1, 2) sont pourvues de fentes (4) orientées de préférence dans le sens de la longueur des nappes.

5. Dispositif selon une des revendications 1 à 4, caractérisé en ce que des percées (3) traversant les nappes sont prévues dans la région des tronçons en forme de rubans où les deux nappes sont assemblées par collage.

6. Dispositif selon une des revendications 1 à 5, caractérisé en ce que la fermeture des espaces (5) remplis, prévus entre les nappes, est réalisée par collage à l'aide d'une colle soluble à l'eau, par exemple par de la cellulose dissoute à l'eau.

### Claims

1. Arrangement for cultivation, especially for grassing down floor spaces, comprising two decaying strip-like formations, said formations being permeable to water, being arranged on top of each other and partially connected together, the length of said formations being considerably higher than their width, and said formations nearly fully enclosing seeds for cultivation, especially grass seeds, characterized in that one of the two strips (1, 2) is smooth and the other is corrugated, whereby the ripples caused by the corrugation are filled with a mixture, said mixture consisting of seeds for cultivation and dry soil and being arranged laterally to the longitudinal direction of the plane formations, and furthermore that the filled spaces (5) intended for the plane formations (1, 2) are closed in the longitudinal direction of said formations.

2. Arrangement in accordance with claim 1, characterized in that both plane formations (1, 2) are connected with each other by means of a water-soluble adhesive.

3. Arrangement in accordance with claim 1 or 2, characterized in that both plane formations (1, 2) are made of bitumen felt, whereby to said bitumen felt lime powder may be added.

4. Arrangement in accordance with claims 1 to 3, characterized in that the plane formations (1, 2) preferably comprise slits (4), said slits being arranged in the longitudinal direction of said plane formations.

5. Arrangement in accordance with one of the claims 1 to 4, characterized in that in the area of the strip-like sections in which both of the plane formations are affixed to each other, channels (3) are arranged which intersperse said formations.

6. Arrangement in accordance with one of the claims 1 to 5, characterized in that the sealing of the filled spaces (5), said spaces being arranged between the plane formations, takes place by gluing together by a water-soluble adhesive, e.g. by cellulose dissolved in water.

Fig.1

1  2  3  4  5

EP 0 203 105 B1

Fig.2

*Fig.4*